# EUROPEAN PATENT APPLICATION

(11) **EP 4 834 625 A1**
(43) Date of publication of application: **04.11.2026**
(21) Application number: 24911899.3
(22) Date of filing: 01.10.2024
(51) Int. Cl.: B60K 8/00, B60K 15/03, B60K 15/035, B60L 50/71, B62D 49/00, H01M 8/04

(54) **WORK VEHICLE**

(30) Priority: 26.12.2023 JP 2023219201; 26.12.2023 JP 2023219125
(71) Applicant: KUBOTA CORPORATION, Osaka-shi, Osaka 530-0011 (JP)
(72) Inventor: YAMAGUCHI, Yasuyoshi, Sakai-shi, Osaka 590-0908 (JP); TAKAKI, Takahiro, Sakai-shi, Osaka 590-0908 (JP)
(74) Representative: Cabinet Beau de Loménie
(86) International application number: PCT/JP2024/035148
(87) International publication number: WO 2025/142005

(57) **Abstract**

The present disclosure relates to a work vehicle. A work vehicle of the present disclosure includes: a vehicle body; a fuel cell that generates electric power using hydrogen as a fuel; a tank that stores hydrogen; a case that houses the tank; and a ventilation device including a fan that allows air inside the case to flow outward. The work vehicle of the present disclosure includes: a vehicle body; a fuel cell that generates electric power using hydrogen that is a gaseous fuel as a fuel; a tank that stores hydrogen; a pipe that is connected to the tank and through which hydrogen can pass; and a first outer pipe and a second outer pipe that cover at least a part of an outside of the pipe.

## Description

### TECHNICAL FIELD

The present invention relates to a work vehicle. The present application claims priority based on Japanese Patent Application No. 2023-219201 filed on December 26, 2023 and Japanese Patent Application No. 2023-219125 filed on December 26, 2023, the entire contents of which are incorporated herein by reference.

### BACKGROUND ART

From the viewpoint of environmental protection, a work vehicle mounted with a fuel cell and driven by a motor rotated by electric power generated by the fuel cell has been proposed (see, for example, Patent Literature 1). The work vehicle uses hydrogen as fuel for the fuel cell. Therefore, the work vehicle includes a tank that stores hydrogen and a case that houses the tank. The work vehicle disclosed in Patent Literature 1 is a tractor.

### CITATION LIST

### [PATENT LITERATURE]

PATENT LITERATURE 1: Japanese Laid-Open Patent Publication No. 2023-13186

### SUMMARY OF THE INVENTION

A work vehicle according to a first aspect of the present disclosure includes: a vehicle body; a fuel cell that generates electric power using hydrogen as a fuel; a tank that stores hydrogen; a case that houses the tank; and a ventilation device including a fan that allows air inside the case to flow outward.

According to the present disclosure, in the work vehicle including the case that houses the tank, hydrogen leaking into the case can be reliably discharged to an outside of the case.

A work vehicle according to a second aspect of the present disclosure includes: a vehicle body; a fuel cell; a tank; a pipe connected to the tank and through which gaseous fuel can pass; and an outer pipe that covers at least a part of an outside of the pipe.

According to the present disclosure, in the work vehicle including the pipe connected to the tank, diffusion to an outside of the gaseous fuel leaking from the pipe can be suppressed.

### BRIEF DESCRIPTION OF DRAWINGS

[FIG. 1] FIG. 1 is a perspective view illustrating a work vehicle according to an embodiment of the present disclosure.
[FIG. 2] FIG. 2 is a right side view illustrating the work vehicle according to the embodiment of the present disclosure.
[FIG. 3] FIG. 3 is a perspective view illustrating an internal structure of the work vehicle according to the embodiment of the present disclosure.
[FIG. 4] FIG. 4 is an explanatory view illustrating an overall configuration of piping in the work vehicle of the present disclosure.
[FIG. 5] FIG. 5 is a schematic view illustrating a first embodiment of a ventilation device and piping in the work vehicle according to the embodiment of the present disclosure.
[FIG. 6] FIG. 6 is a schematic view illustrating a second embodiment of the ventilation device and piping in the work vehicle according to the embodiment of the present disclosure.
[FIG. 7] FIG. 7 is a schematic view illustrating a third embodiment of the ventilation device and piping in the work vehicle according to the embodiment of the present disclosure.

### DETAILED DESCRIPTION

### <Outline of embodiments of the present disclosure>

Hereinafter, an outline of embodiments of the present disclosure will be listed and described.
(1) A work vehicle of the present disclosure includes: a vehicle body; a fuel cell that generates electric power using hydrogen as a fuel; a tank that stores hydrogen; a case that houses the tank; and a ventilation device including a fan that allows air inside the case to flow outward.
   According to the above configuration, in the work vehicle including the case that houses the tank, hydrogen leaking into the case can be reliably discharged to an outside of the case by the fan.
(2) In the work vehicle according to the above mode (1), it is preferable that the case includes an exhaust port communicating with an inside of the case, and the fan is provided near the exhaust port.
   According to the above configuration, the fan can be easily provided.
(3) In the work vehicle according to the above mode (1) or (2), the fan is preferably provided outside the case.
   According to the above configuration, the fan can be easily provided.
(4) In the work vehicle according to any one of the above modes (1) to (3), the case preferably includes an air supply port communicating with an inside of the case.
   According to the above configuration, it is possible to reliably generate an air flow for exhausting hydrogen. Thus, the hydrogen leaking into the case can be reliably discharged to the outside of the case by the fan.
(5) The work vehicle according to any one of the above modes (1) to (4) preferably further includes: a first pipe connecting the tank and the fuel cell; and a first outer pipe that covers at least a part of an outside of the first pipe.
   According to the above configuration, diffusion of hydrogen leaking from the first pipe can be suppressed by the first outer pipe.
(6) The work vehicle according to any one of the above modes (1) to (5) preferably further includes: a second pipe connecting the tank and a filling port for filling hydrogen in the tank; and a second outer pipe that covers at least a part of an outside of the second pipe.
   According to the above configuration, the diffusion of hydrogen leaking from the second pipe can be suppressed by the second outer pipe.
(7) The work vehicle according to any one of the above modes (1) to (6) preferably further includes: a first radiator that cools the fuel cell; and a first radiator fan that sends cooling air to the first radiator, in which the fan is preferably the first radiator fan.
   According to the above configuration, the ventilation device can be simply configured using the first radiator fan originally provided in the work vehicle. According to the above configuration, in the work vehicle including the case that houses the tank, the hydrogen leaking into the case can be reliably discharged to the outside of the case by the first radiator fan.
(8) The work vehicle according to any one of the above modes (1) to (7) preferably further includes: a prime mover; a second radiator that cools the prime mover; and a second radiator fan that sends cooling air to the second radiator, in which the fan is preferably the second radiator fan.
   According to the above configuration, the ventilation device can be simply configured using the second radiator fan originally provided in the work vehicle. According to the above configuration, in the work vehicle including the case that houses the tank, the hydrogen leaking into the case can be reliably discharged to the outside of the case by the second radiator fan.
(9) The work vehicle according to any one of the above modes (1) to (8) preferably further includes a hydrogen sensor that detects hydrogen, in which the hydrogen sensor is preferably disposed inside the case.
   According to the above configuration, hydrogen present inside the case can be reliably detected by the hydrogen sensor. This makes it possible to reliably detect leakage of hydrogen generated in the tank.
(10) A work vehicle of the present disclosure includes: a vehicle body; a fuel cell; a tank; a pipe connected to the tank and through which gaseous fuel can pass; and an outer pipe that covers at least a part of an outside of the pipe.
   According to the above configuration, in the work vehicle including the pipe connected to the tank, diffusion to an outside of the gaseous fuel leaking from the pipe can be suppressed by the outer pipe.
(11) In the work vehicle according to the above mode (10), it is preferable that the pipe includes a first pipe connecting the tank and the fuel cell, and the outer pipe includes a first outer pipe that covers at least a part of an outside of the first pipe.
   According to the above configuration, diffusion to the outside of the gaseous fuel leaking from the first pipe can be suppressed by the first outer pipe.
(12) The work vehicle according to the above mode (10) or (11) preferably further includes a case that houses the tank, in which the first outer pipe is preferably connected to the case.
   According to the above configuration, the gaseous fuel leaking from the first pipe can be collected in the case by the first outer pipe. This makes it possible to suppress diffusion to the outside of the gaseous fuel leaking from the first pipe.
(13) In the work vehicle according to any one of the above modes (10) to (12), the first outer pipe preferably includes a first open portion communicating with an outside.
   According to the above configuration, the air can flow from the first open portion to the case through the first outer pipe. With this air flow, the gaseous fuel leaking from the first pipe can be reliably collected in the case.
(14) In the work vehicle according to any one of the above modes (10) to (13), it is preferable that the pipe includes a second pipe connecting the tank and a filling port for filling the tank with hydrogen that is the fuel, and the outer pipe includes a second outer pipe that covers at least a part of an outside of the second pipe.
   According to the above configuration, diffusion to the outside of hydrogen leaking from the second pipe can be suppressed by the second outer pipe.
(15) The work vehicle according to the above mode (14) preferably further includes a case that houses the tank, in which the second outer pipe is preferably connected to the case.
   According to the above configuration, hydrogen leaking from the second pipe can be collected in the case by the second outer pipe. This makes it possible to suppress diffusion to the outside of the gaseous fuel leaking from the second pipe.
(16) In the work vehicle according to the above mode (14) or (15), the second outer pipe preferably includes a second open portion communicating with an outside.
   According to the above configuration, the air can flow from the second open portion to the case through the second outer pipe. With this air flow, hydrogen leaking from the second pipe can be reliably collected in the case.
(17) In the work vehicle according to any one of the above modes (10) to (16), the case preferably includes an exhaust port communicating with an outside.
   According to the above configuration, the air can reliably flow from the outside to the case through the outer pipe. With this air flow, the gaseous fuel leaking from the pipe can be reliably collected in the case. This makes it possible to reliably suppress diffusion to the outside of the gaseous fuel leaking from the pipe.
(18) The work vehicle according to any one of the above modes (10) to (17) preferably further includes a hydrogen sensor that detects hydrogen, in which the hydrogen sensor is preferably disposed inside the case.
   According to the above configuration, hydrogen that is fuel of the machine body present inside the case can be reliably detected by the hydrogen sensor. This makes it possible to reliably detect leakage of hydrogen generated in the tank.

### <Technical problem>

In the work vehicle including the case that houses the tank, when leakage of hydrogen from the tank occurs, the leaked hydrogen stays inside the case. The work vehicle is required to reliably discharge hydrogen leaked into the case to the outside of the case.

An object of the present disclosure related to the work vehicle according to any one of the above modes (1) to (9) is to reliably discharge hydrogen leaked into the case to the outside of the case in the work vehicle including the case that houses the tank.

In addition, the work vehicle including the pipe connected to the tank housed in the case can suppress the diffusion of hydrogen leaked from the tank by the case. On the other hand, when leakage of hydrogen occurs from a hydrogen pipe in the work vehicle, the leaked hydrogen diffuses to the outside without limitation.

An object of the present disclosure related to the work vehicle according to any one of the above modes (10) to (18) is to suppress diffusion to the outside of gaseous fuel leaked from the pipe in the work vehicle including the pipe connected to the tank.

### <Advantageous effects of the invention>

According to the work vehicle according to any one of the above modes (1) to (9) of the present disclosure, in the work vehicle including the case that houses the tank, the hydrogen leaking into the case can be reliably discharged to the outside of the case.

Further, according to the work vehicle according to any one of the above modes (10) to (18) of the present disclosure, in the work vehicle including the pipe connected to the tank, diffusion to the outside of the gaseous fuel leaking from the pipe can be suppressed.

### <Details of embodiments of the present disclosure>

Hereinafter, embodiments of the present disclosure will be described in detail with reference to the drawings. Note that at least a part of the embodiments described below may be arbitrarily combined.

### [Overall structure of work vehicle]

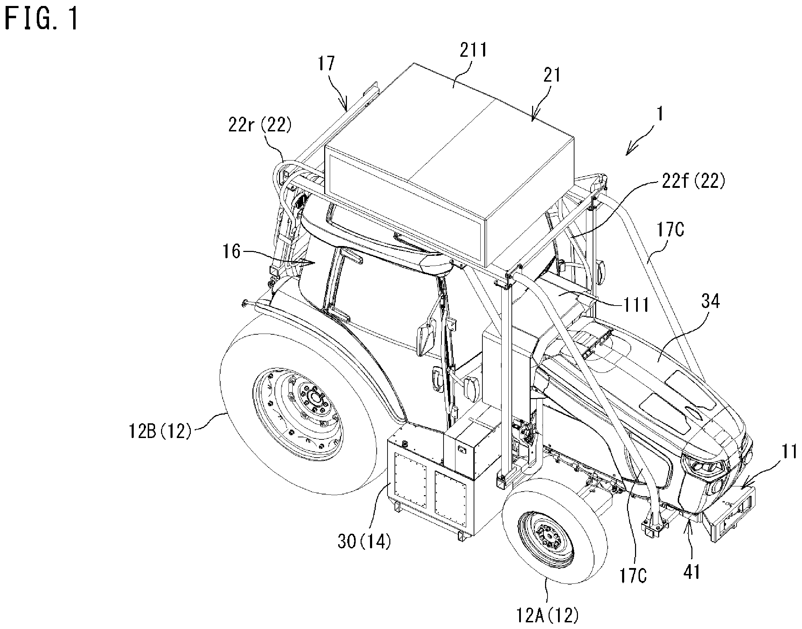

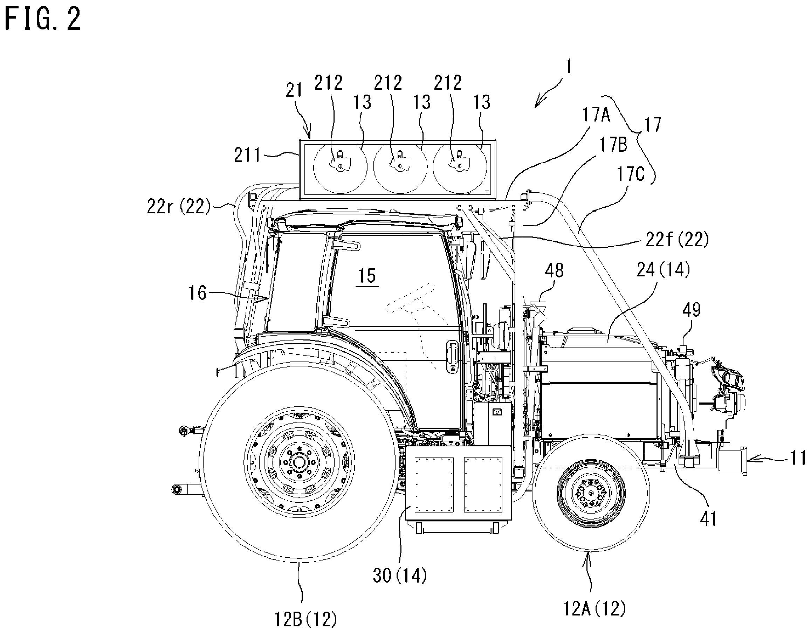

FIG. 1 is a perspective view illustrating an embodiment of the work vehicle according to the present disclosure, and illustrates an example of an overall structure of a work vehicle 1. FIG. 2 is a right side view illustrating the embodiment of the work vehicle of the present disclosure, and illustrates the work vehicle 1 in a state where a part (such as a hood 34 or a cover 111) of exterior parts is removed. As illustrated in FIG. 1 and FIG. 2, the work vehicle 1 is a vehicle used for agricultural work, specifically, a tractor. However, the work vehicle 1 is not limited to the tractor, and may be a moving vehicle such as an agricultural machine, a construction machine, or a utility vehicle.

Directions of the work vehicle 1 of the present disclosure will be defined. A direction in which the work vehicle 1 moves forward is defined as front, a direction in which the work vehicle 1 moves rearward is defined as rear, a left side facing forward is defined as left, and a right side facing forward is defined as right. A left-right direction orthogonal to a front-rear direction is defined as a vehicle width direction. A direction orthogonal to both the front-rear direction and the vehicle width direction (left-right direction) is defined as an up-down direction. The up-down direction is also referred to as a height direction.

As illustrated in FIG. 1 and FIG. 2, the work vehicle 1 includes a vehicle body 11, a traveling device 12 that supports the vehicle body 11, a driver's seat 15, a cabin 16, and the like. The vehicle body 11 includes a chassis 41, the hood 34, the cover 111, the cabin 16, a fender for a rear wheel 12B, and the like. Specifically, the hood 34 and the cover 111 are mounted on the chassis 41 of the vehicle body 11 in order from the front to the rear, and the cabin 16 is disposed behind the cover 111.

The work vehicle 1 further includes a tank unit 21 having a plurality of tanks 13 for storing fuel therein, and a drive device 14 driven by the stored fuel. The fuel is liquid or gas, and is hydrogen, methane, carbon monoxide (CO), or the like. In this embodiment, the tank 13 stores hydrogen gas. Therefore, the work vehicle 1 is a fuel cell vehicle (FCV), and travels using electric power generated by a chemical reaction between hydrogen and oxygen by a fuel cell 24 as an energy source. The fuel cell 24 may generate electric power with methane or carbon monoxide (CO).

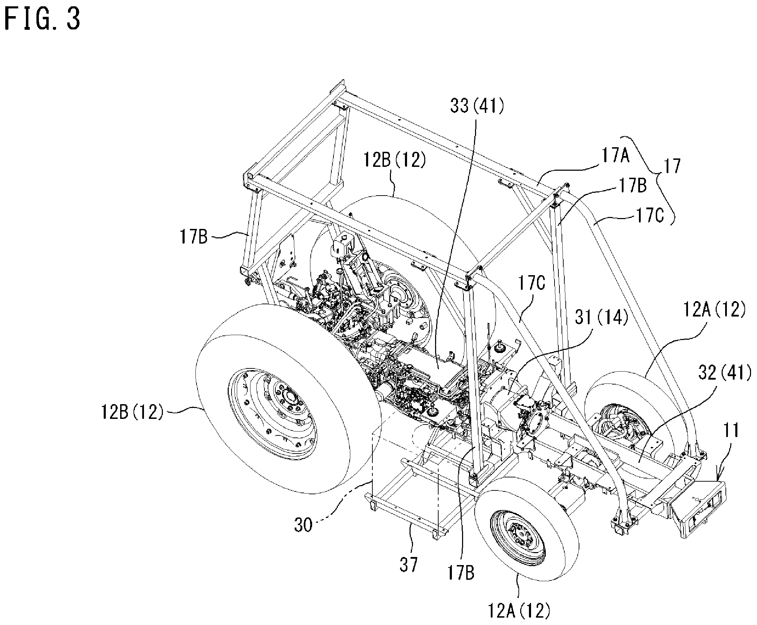

The drive device 14 includes the fuel cell 24, a battery unit 30, and an electric motor 31 (see FIG. 3: hereinafter, also referred to as "motor 31"). The work vehicle 1 has a pipe through which gaseous fuel (hydrogen gas, methane gas, CO gas, or the like) discharged from the tank 13 can pass. In this embodiment, hydrogen gas can pass through a pipe 22. The work vehicle 1 includes a filling unit 25 having a hydrogen gas filling port 26. The hydrogen gas is supplied from the filling port 26 connected to an end of the pipe 22 and is filled in each tank 13. The hydrogen gas in the tank 13 is supplied to the fuel cell 24 through the pipe 22.

The cabin 16 is a partitioned driver's cab having front pillars, rear pillars, and a roof. The front pillars are arranged on the left and right on the front side of the driver's seat 15, and the rear pillars are arranged on the left and right on the rear side of the driver's seat 15. The work vehicle 1 may have a canopy or a rollover protective structure (ROPS) instead of the cabin 16. When the work vehicle 1 is not mounted with the cabin 16, the tank unit 21 is disposed above the driver's seat 15 by an installation frame 17.

The traveling device 12 includes front wheels 12A and rear wheels 12B. They are arranged symmetrically with respect to the vehicle body 11. One or both of the front wheel 12A and the rear wheel 12B are rotated by power of the motor 31. One or both (drive wheel) of the front wheel 12A and the rear wheel 12B rotated by the power of the motor 31 may be a crawler (endless track).

As illustrated in FIG. 2, a first cooling device 48, the fuel cell 24, and a second cooling device 49 are mounted on a portion of the chassis 41 corresponding to the front wheel 12A in order from the front to the rear. The first cooling device 48 and the fuel cell 24 are covered with the hood 34, and the second cooling device 49 is covered with the cover 111. The first cooling device 48 is a device that cools the fuel cell 24. The first cooling device 48 includes a first radiator 48a and a first radiator fan 48b. The second cooling device 49 is a device that cools the motor 31 and the like. The second cooling device 49 includes a second radiator 49a and a second radiator fan 49b. Note that arrangement of the first cooling device 48 and the second cooling device 49 in the work vehicle 1 is an example and is not limited to a configuration in which they are mounted on a front portion of the vehicle body 11.

### [Internal structure of work vehicle]

FIG. 3 is a perspective view illustrating an internal structure of the work vehicle according to the embodiment of the present disclosure, and illustrates an example of an internal structure of the work vehicle 1. As illustrated in FIG. 3, the chassis 41 constituting the vehicle body 11 is formed of a steel frame having a shape elongated in the front-rear direction, and includes a front frame 32 and a transmission case 33. The transmission case 33 is connected to a rear portion of the front frame 32, and a skeleton of the vehicle body 11 is formed of the transmission case 33 and the front frame 32.

The installation frame 17 for arranging the tank unit 21 above the cabin 16 is connected to the chassis 41. The installation frame 17 includes a ceiling frame 17A having a substantially rectangular shape that is longer in the front-rear direction than in the left-right direction, a plurality of pillars 17B supporting the ceiling frame 17A from below, and a pair of left and right reinforcement frames 17C connected to a front end of the ceiling frame 17A.

A support frame 37 for causing the vehicle body 11 to support the battery unit 30 is connected to the chassis 41 of the work vehicle 1. Specifically, the motor 31 is mounted on the front frame 32 of the chassis 41, and the support frame 37 is attached to a portion of front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates rotation of an output shaft of the motor 31 to transmit the rotation to the traveling device 12.

### [Overall configuration of piping]

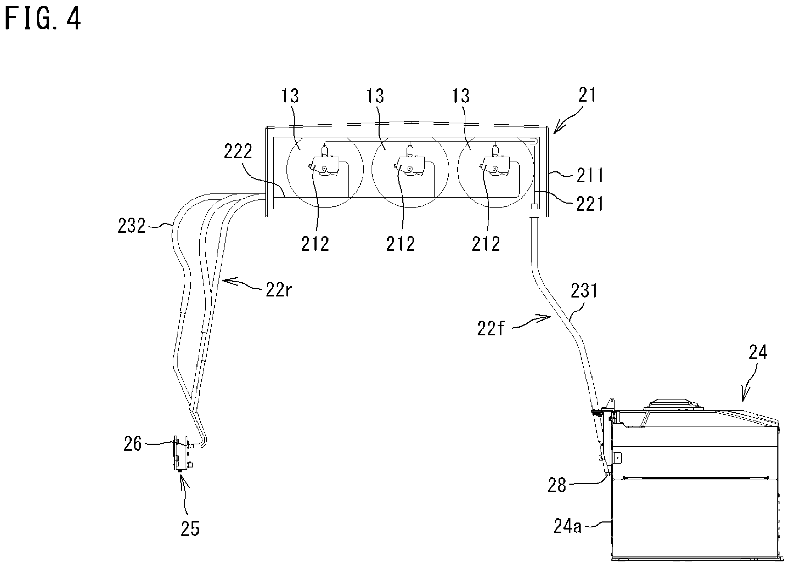

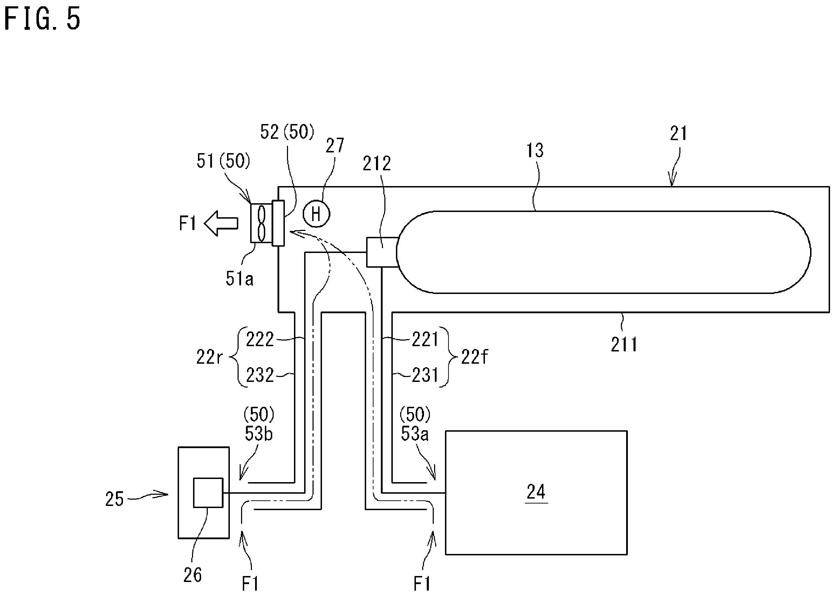

FIG. 4 is an explanatory view illustrating an overall configuration of piping in the work vehicle of the present disclosure. FIG. 5 is a schematic view illustrating a first embodiment of the ventilation device and piping in the work vehicle according to the embodiment of the present disclosure. As illustrated in FIG. 4, the pipe 22 in the work vehicle 1 includes a front pipe 22f extending from the tank 13 to the fuel cell 24 via a valve unit 212, and a rear pipe 22r extending from the tank 13 to the filling unit 25 via the valve unit 212. The tank 13 is housed in a case 211. The case 211 protects the tank 13 from direct sunlight, collisions with objects, and the like, and also suppresses the diffusion of hydrogen leaking around the tank 13 to the outside.

FIG. 5 schematically illustrates a configuration of the pipe 22 in the work vehicle 1 of the present embodiment. As illustrated in FIG. 5, the front pipe 22f includes a first inner pipe 221 and a first outer pipe 231. The rear pipe 22r includes a second inner pipe 222 and a second outer pipe 232.

In the front pipe 22f, one end of first inner pipe 221 is connected to a connection port 28 provided in a rear portion 24a of the fuel cell 24, and the other end of the first inner pipe 221 is connected to the valve unit 212. A part of the first inner pipe 221 is located inside the case 211, and the other part of the first inner pipe 221 is located outside the case 211.

In the rear pipe 22r, one end of the second inner pipe 222 is connected to the filling port 26 provided in the filling unit 25, and the other end of the second inner pipe 222 is connected to the valve unit 212. A part of the second inner pipe 222 is located inside the case 211, and the other part of the second inner pipe 222 is located outside the case 211.

In the front pipe 22f, one end of first outer pipe 231 extends to the vicinity of the rear portion 24a of the fuel cell 24 to be opened. An open portion at the one end of the first outer pipe 231 constitutes a first air supply port 53a. The first air supply port 53a is the open portion that communicates an inside of the first outer pipe 231 with an outside thereof. The other end of the first outer pipe 231 is connected to the case 211 and communicates with the inside of the case 211. The first outer pipe 231 communicates the vicinity of the rear portion 24a of the fuel cell 24 with the inside of the case 211. The first outer pipe 231 covers an outside of a portion of the first inner pipe 221 located outside the case 211.

In the front pipe 22f, the first outer pipe 231 suppresses diffusion to the outside of hydrogen leaking from the first inner pipe 221. The first outer pipe 231 sucks air in the vicinity of the rear portion 24a of the fuel cell 24 from the first air supply port 53a to suppress the diffusion of hydrogen leaking in the vicinity of the rear portion 24a of the fuel cell 24.

In the rear pipe 22r, one end of the second outer pipe 232 extends to the vicinity of the filling port 26 to be opened. An open portion at the one end of the second outer pipe 232 constitutes a second air supply port 53b. The second air supply port 53b is the open portion that communicates an inside of the second outer pipe 232 with an outside thereof. The other end of the second outer pipe 232 is connected to the case 211 and communicates with the inside of the case 211. The second outer pipe 232 communicates the vicinity of the filling unit 25 with the inside of the case 211. The second outer pipe 232 covers an outside of a portion of the second inner pipe 222 located outside the case 211.

In the rear pipe 22r, the second outer pipe 232 suppresses diffusion to the outside of hydrogen leaking from the second inner pipe 222. Since the work vehicle 1 includes the second outer pipe 232, it is possible to suppress the diffusion of hydrogen leaking from the second inner pipe 222 to the outside. The second outer pipe 232 sucks air in the vicinity of the filling unit 25 from the second air supply port 53b to suppress, for example, the diffusion of hydrogen leaking in the vicinity of the filling port 26.

Note that although the work vehicle 1 of the present disclosure includes both the first outer pipe 231 in the front pipe 22f and the second outer pipe 232 in the rear pipe 22r, the work vehicle 1 of the present disclosure may be configured to include either one of the first outer pipe 231 and the second outer pipe 232.

### [Ventilation device]

As illustrated in FIG. 5, the work vehicle 1 (see FIG. 1) of the present disclosure includes a ventilation device 50. The ventilation device 50 is a device that allows air (hydrogen gas, methane gas, CO gas, and the like) in the case 211 to flow outward. In this embodiment, the ventilation device 50 allows air containing hydrogen gas in the case 211 to flow outward. The ventilation device 50 includes a fan 51, an exhaust port 52, and an air supply port 53 (the first air supply port 53a and the second air supply port 53b). The ventilation device 50 allows the air to flow from the air supply port 53 to the exhaust port 52 by the fan 51 to ventilate the inside of the case 211.

When there is leakage of hydrogen from the tank 13 in the case 211, the leaked hydrogen stays in an upper portion in the case 211 due to the property of having a specific gravity smaller than that of air. Therefore, it is preferable that the exhaust port 52 is provided in the upper portion of the case 211 in the up-down direction. In the ventilation device 50, the exhaust port 52 is disposed above the air supply port 53. With such a configuration, the ventilation device 50 can generate a natural flow of air (an upward airflow) due to a chimney effect in an internal space of the case 211 and internal spaces of the first outer pipe 231 and the second outer pipe 232. Specifically, in the ventilation device 50, the air enters the first outer pipe 231 and the second outer pipe 232 from the air supply port 53, flows into the case 211, and further flows out from the exhaust port 52 to the outside.

The ventilation device 50 further includes a hydrogen sensor 27. The hydrogen sensor 27 is provided inside the case 211. The hydrogen sensor 27 is preferably provided near the exhaust port 52, and more preferably disposed in the air flow exhausted from the exhaust port 52. Note that in the ventilation device 50, the hydrogen sensor 27 may be provided between the first inner pipe 221 and the first outer pipe 231 and/or between the second inner pipe 222 and the second outer pipe 232. In this case, it is possible to more specifically identify a location where leakage of hydrogen occurs.

When there is leakage of hydrogen from the first inner pipe 221 and the second inner pipe 222, the leaked hydrogen rises and flows in the first outer pipe 231 and the second outer pipe 232 due to the property of having a specific gravity smaller than that of air, and flows into the case 211. In the ventilation device 50, the hydrogen sensor 27 can detect not only leakage of hydrogen generated in the case 211 but also leakage of hydrogen generated from the first inner pipe 221 and the second inner pipe 222 by detecting hydrogen collected in the case 211.

### [First embodiment of ventilation device]

In the ventilation device 50 (hereinafter, also referred to as first ventilation device 50A) according to the first embodiment illustrated in FIG. 5, the fan 51 is a dedicated ventilation fan 51a provided to ventilate the inside of the case 211. In the first ventilation device 50A, the exhaust port 52 is an opening formed in a side surface of the case 211. In the first ventilation device 50A, the air supply port 53 includes a first air supply port 53a of the first outer pipe 231 and a second air supply port 53b of the second outer pipe 232.

In the first ventilation device 50A, the ventilation fan 51a is directly attached to the exhaust port 52. The ventilation fan 51a of the present embodiment is disposed to close an opening at an outer end of an air passage constituting the exhaust port 52. The ventilation fan 51a may be disposed to close an opening at an inner end of the air passage constituting the exhaust port 52, or may be disposed to close the air passage in the air passage constituting the exhaust port 52. In this case, since a duct connecting the fan 51 and the exhaust port 52 is unnecessary, the ventilation device 50 can be simply configured. In the first ventilation device 50A, the ventilation fan 51a is disposed outside the case 211. With such a configuration, construction of electric wiring or the like connected to the ventilation fan 51a is facilitated.

In the first ventilation device 50A, when the ventilation fan 51a is operated, air sucked from the first air supply port 53a and the second air supply port 53b flows into the case 211 respectively through the first outer pipe 231 and the second outer pipe 232, and then, an air flow F1 exhausted to the outside from the exhaust port 52 is generated. When hydrogen leaks from the first inner pipe 221 and the second inner pipe 222, the leaked hydrogen is collected in the case 211 by the air flow F1. The air collected at the upper portion in the case 211 is exhausted to the outside of the case 211 by the air flow F1.

### [Second embodiment of ventilation device]

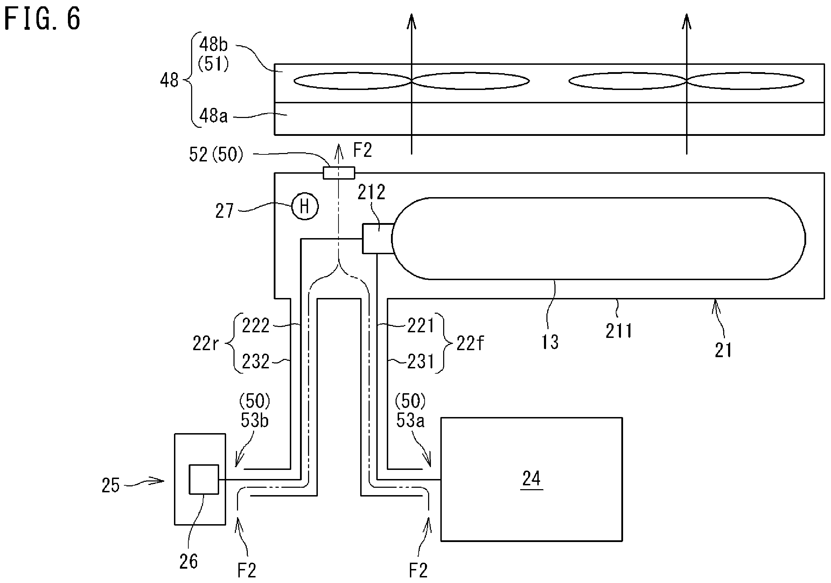

FIG. 6 is a schematic view illustrating a second embodiment of the ventilation device and piping in the work vehicle according to the embodiment of the present disclosure. The work vehicle 1 (see FIG. 1) of the present disclosure may employ the ventilation device 50 (hereinafter, also referred to as second ventilation device 50B) according to the second embodiment illustrated in FIG. 6 as the ventilation device 50. The fan 51 in the second ventilation device 50B is the first radiator fan 48b constituting the first cooling device 48. The first radiator fan 48b is a fan originally provided in the work vehicle 1 for cooling the fuel cell 24. Therefore, the second ventilation device 50B does not need to be additionally provided with the fan 51 (ventilation fan 51a illustrated in FIG. 5), which is advantageous in terms of cost. In addition, the second ventilation device 50B can easily configure the ventilation device 50 by using the first radiator fan 48b originally provided in the work vehicle 1. Note that when the second ventilation device 50B is employed, it is preferable that first cooling device 48 is disposed not in a position illustrated in FIG. 2 but in a position adjacent to the exhaust port 52 provided in the case 211 as appropriate.

By the upward airflow generated in the first outer pipe 231 and the second outer pipe 232, the air sucked from the first air supply port 53a and the second air supply port 53b flows into the case 211 respectively through the first outer pipe 231 and the second outer pipe 232, and then is exhausted to the outside from the exhaust port 52. Thus, an air flow F2 is generated. As illustrated in FIG. 6, it is preferable that the exhaust port 52 in the second ventilation device 50B is provided on a top surface of the case 211. Thus, hydrogen staying in the upper portion of the case 211 can be efficiently discharged to the outside from the exhaust port 52.

When hydrogen leaks from the first inner pipe 221 and the second inner pipe 222, the second ventilation device 50B can collect the hydrogen leaking into the case 211 by the air flow F2. The second ventilation device 50B can discharge the hydrogen collected in the case 211 to the outside of the case 211 by the air flow F2 and diffuse the hydrogen into the atmosphere.

Furthermore, the second ventilation device 50B reduces an air pressure near a suction side of the first radiator fan 48b by an operation of the first radiator fan 48b, thereby promoting exhaust from the exhaust port 52. Then, the second ventilation device 50B further promotes the diffusion of hydrogen exhausted from the exhaust port 52 by an airflow generated by the first radiator fan 48b.

### [Third embodiment of ventilation device]

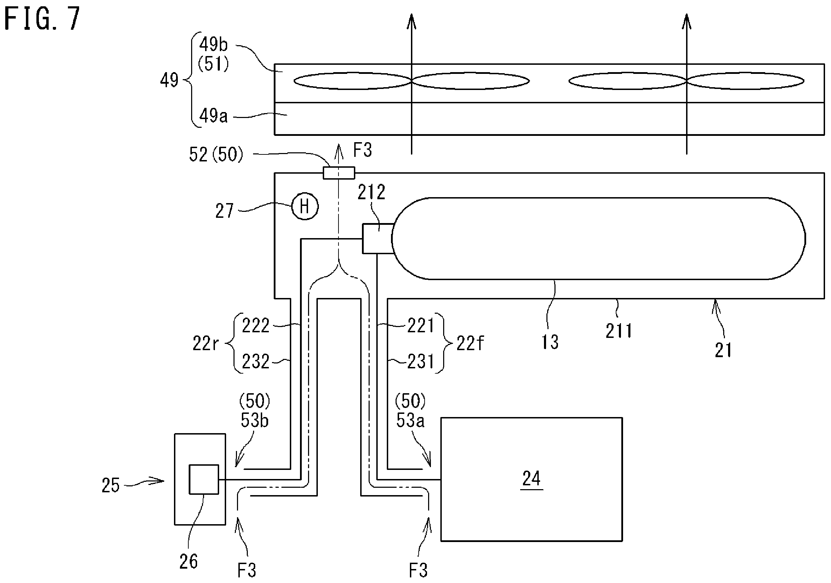

FIG. 7 is a schematic diagram illustrating a third embodiment of the ventilation device and piping in the work vehicle according to the embodiment of the present disclosure. The work vehicle 1 (see FIG. 1) of the present disclosure may employ the ventilation device 50 (hereinafter, also referred to as third ventilation device 50C) according to the third embodiment illustrated in FIG. 7 as the ventilation device 50. The fan 51 in the third ventilation device 50C is the second radiator fan 49b constituting the second cooling device 49. The second radiator fan 49b is a fan originally provided in the work vehicle 1 for cooling the prime mover such as the motor 31. Therefore, the third ventilation device 50C does not need to be additionally provided with the fan 51 (ventilation fan 51a illustrated in FIG. 5), which is advantageous in terms of cost. In addition, the third ventilation device 50C can easily configure the ventilation device 50 by using the second radiator fan 49b originally provided in the work vehicle 1. Note that when the third ventilation device 50C is employed, it is preferable that the second cooling device 49 is disposed not in a position illustrated in FIG. 2 but in a position adjacent to the exhaust port 52 provided in the case 211 as appropriate.

By the upward airflow generated in the first outer pipe 231 and the second outer pipe 232, the air sucked from the first air supply port 53a and the second air supply port 53b flows into the case 211 respectively through the first outer pipe 231 and the second outer pipe 232, and then is exhausted to the outside from the exhaust port 52. Thus, an air flow F3 is generated. As illustrated in FIG. 7, it is preferable that the exhaust port 52 in the third ventilation device 50C is provided on a top surface of the case 211. Thus, hydrogen staying in the upper portion of the case 211 can be efficiently discharged to the outside from the exhaust port 52.

When hydrogen leaks from the first inner pipe 221 and the second inner pipe 222, the third ventilation device 50C can collect the hydrogen leaking into the case 211 by the air flow F3. The third ventilation device 50C can discharge the hydrogen collected in the case 211 to the outside of the case 211 by the air flow F3 and diffuse the hydrogen into the atmosphere.

Furthermore, the third ventilation device 50C reduces the air pressure near the suction side of the second radiator fan 49b by an operation of the second radiator fan 49b, thereby promoting the exhaust from the exhaust port 52. Then, the third ventilation device 50C further promotes the diffusion of hydrogen exhausted from the exhaust port 52 by the airflow generated by second radiator fan 49b.

The embodiments are illustrative in all respects and are not restrictive. The scope of the present invention is defined by claims rather than the embodiments, and includes all changes within the scope equivalent to configurations described in claims.

### REFERENCE SIGNS LIST

- 1: work vehicle
- 11: vehicle body
- 13: tank
- 22: pipe
- 22f: front pipe (first pipe)
- 221: first pipe
- 231: first outer pipe
- 22r: rear pipe (second pipe)
- 222: second inner pipe
- 232: second outer pipe
- 24: fuel cell
- 26: filling port
- 27: hydrogen sensor
- 31: motor (prime mover)
- 48a: first radiator
- 48b: first radiator fan (fan)
- 49a: second radiator
- 49b: second radiator fan (fan)
- 50: ventilation device
- 51: fan
- 51a: ventilation fan (fan)
- 52: exhaust port
- 53: air supply port
- 53a: first air supply port (first open portion)
- 53b: second air supply port (second open portion)
- 211: case

## Claims

1. A work vehicle comprising:
a vehicle body;
a fuel cell that generates electric power using hydrogen as a fuel;
a tank that stores hydrogen;
a case that houses the tank; and
a ventilation device including a fan that allows air inside the case to flow outward.

2. The work vehicle according to claim 1, wherein
the case includes an exhaust port communicating with an inside of the case, and
the fan is provided near the exhaust port.

3. The work vehicle according to claim 1 or 2, wherein the fan is provided outside the case.

4. The work vehicle according to claim 1 or 2, wherein the case includes an air supply port communicating with an inside of the case.

5. The work vehicle according to claim 1 or 2, further comprising:
a first pipe connecting the tank and the fuel cell; and
a first outer pipe that covers at least a part of an outside of the first pipe.

6. The work vehicle according to claim 1 or 2, further comprising:
a second pipe connecting the tank and a filling port for filling hydrogen in the tank; and
a second outer pipe that covers at least a part of an outside of the second pipe.

7. The work vehicle according to claim 1 or 2, further comprising:
a first radiator that cools the fuel cell; and
a first radiator fan that sends cooling air to the first radiator, wherein
the fan is the first radiator fan.

8. The work vehicle according to claim 1 or 2, further comprising:
a prime mover;
a second radiator that cools the prime mover; and
a second radiator fan that sends cooling air to the second radiator, wherein
the fan is the second radiator fan.

9. The work vehicle according to claim 1 or 2, further comprising a hydrogen sensor that detects hydrogen, wherein
the hydrogen sensor is disposed inside the case.

10. A work vehicle comprising:
a vehicle body;
a fuel cell;
a tank;
a pipe connected to the tank and through which gaseous fuel can pass; and
an outer pipe that covers at least a part of an outside of the pipe.

11. The work vehicle according to claim 10, wherein
the pipe includes a first pipe connecting the tank and the fuel cell, and
the outer pipe includes a first outer pipe that covers at least a part of an outside of the first pipe.

12. The work vehicle according to claim 11, further comprising a case that houses the tank, wherein
the first outer pipe is connected to the case.

13. The work vehicle according to claim 11 or 12, wherein the first outer pipe includes a first open portion communicating with an outside.

14. The work vehicle according to claim 11, wherein
the pipe includes a second pipe connecting the tank and a filling port for filling the tank with hydrogen that is the fuel, and
the outer pipe includes a second outer pipe that covers at least a part of an outside of the second pipe.

15. The work vehicle according to claim 14, further comprising a case that houses the tank, wherein
the second outer pipe is connected to the case.

16. The work vehicle according to claim 14 or 15, wherein the second outer pipe includes a second open portion communicating with an outside.

17. The work vehicle according to claim 12 or 15, wherein the case includes an exhaust port communicating with an outside.

18. The work vehicle according to any one of claims 12, 15, and 17, further comprising a hydrogen sensor that detects hydrogen, wherein
the hydrogen sensor is disposed inside the case.
